# EUROPEAN PATENT SPECIFICATION

(11) **EP 2 128 049 B1**
(45) Date of publication and mention of the grant of the patent: **09.01.2013**
(21) Application number: 08721554.7
(22) Date of filing: 07.03.2008
(51) Int. Cl.: B65G 15/08, B65G 43/02

(54) **PIPE CONVEYOR BELT DEFORMATION STATE DETECTOR**
SCHLAUCHFÖRDERBANDVERFORMUNGSZUSTANDSDETEKTOR
DÉTECTEUR D'ÉTAT DE DÉFORMATION DE COURROIE TRANSPORTEUSE TUBULAIRE

(30) Priority: 08.03.2007 JP 2007057994
(43) Date of publication of application: 02.12.2009
(73) Proprietor: Kabushiki Kaisha Bridgestone, Tokyo 104-8340 (JP)
(72) Inventor: FURUKAWA, Kazuya, Yokohama-shi Kanagawa 244-8510 (JP); NISHIKITA, Yukinobu, Yokohama-shi Kanagawa 244-8510 (JP)
(74) Representative: Waldren, Robin Michael
(86) International application number: PCT/JP2008/054136
(87) International publication number: WO 2008/108457

(56) References cited:
- JP-A- 08 244 952
- JP-A- 09 169 423
- JP-A- 09 169 423
- JP-A- 60 112 512
- JP-A- 60 112 512
- JP-A- 2000 355 412
- US-B1- 6 712 199

## Description

### TECHNICAL FIELD

The present invention relates to an apparatus for detecting the deformation state such as a twist and depression of a pipe-conveyor into which an endless circulating belt is rolled up for conveying an object, according to the preamble of claim 1 as disclosed in JP-A-60112512.

### BACKGROUND ART

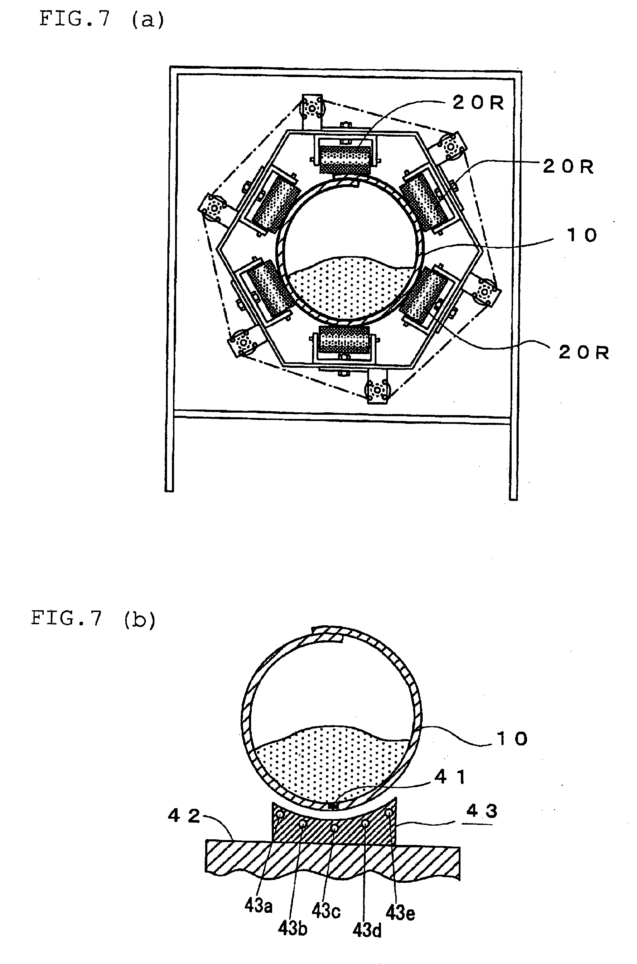

As shown in Fig.7, in order to prevent an overlap portion of the rolled up conveyor belt 10 from twisting during conveying the object, the pipe-conveyor into which an endless circulating belt is rolled up for conveying an object comprises a plurality of correction rollers 20R which are arranged on an area by which the rolled up part of the conveyor belt 10 passes. The conveyor belt 10 is cicely ran with making the plurality of correction rollers 20 abut with the conveyor belt 10 from the circumference of the rolled conveyor belt 10. At this point, as shown in Fig.7 (a), a line-formed or tape-formed detected zone 41 which is consists of steel or metal is berried in a bottom of the conveyor belt 10 along with a center line which extending in a longitudinal direction. Also, a plurality of sensor elements 43a - 43e, which are arranged along with an outer circumferential surface of the conveyor belt 10 at constant intervals and have different detecting sensitivity from each other, are installed to a support frame 42 which is arranged on the bottom side of the rolled up conveyor belt 10 to detect a twisting state of the conveyor belt 10. In accordance with the detected twisting state, a belt controller (not shown) is activated to adjust contact angle and contact strength of the correction rollers so that twisting of the conveyor belt 10 may be corrected.

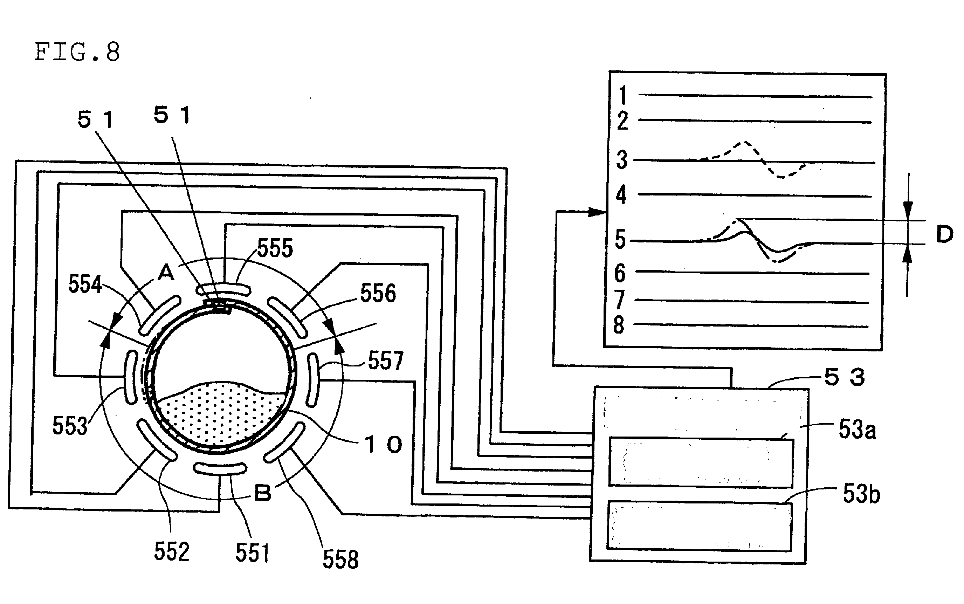

However, according to the conventional twist detecting method, since the sensor 43 is installed to the bottom, it is difficult to detect how much the overlap portion of the conveyor belt 10 crushes inwardly. In order to resolve such problem, as shown in Fig. 8, the inventor suggested the method comprising the steps of arranging permanent magnets 51 and 51 on both ends of the conveyor belt 10, arranging a plurality of loop coils 551 - 558 on a position through which the conveyor belt 10 passes with surrounding the conveyor belt, comparing output signal of each loop coil 551 - 558 and judging whether the twisted degree of the conveyor belt 10 that is rolled up in the form of the pipe and the depression degree of the overlap portion to an inner side exceed a predetermined allowable limit (JP2007-091356).
Concretely, an outer circumference side of the conveyor belt 10, which is rolled up in the form of the pipe, is classified into an allowable zone (A) and non-allowable zone (B), when the overlap portion of the conveyor belt 10 provided with the permanent magnets 51, 51 moves in twist; and a judging means 53, which judges whether twist occurs by comparing output of loop coils 551 - 558, is arranged. When magnetic force from the permanent magnet, which is detected by the loop coils 554 - 556 arranged in the allowance zone (A), is the largest, a twist judging means 53a of the judging means 53 judges that twist does not occur. Also, when the twist does not occur, a depression judging means 53b of the judging means compares a predetermined limit value D with a peak of signal of the loop coil that is output signal is the largest of the loop coils 554 - 556 and judges whether the depression occurs, when the peak falls below the limit value D. Thereby, it is possible to determine whether the twisted state of the conveyor belt 10 that is rolled up in the form of the pipe falls within the allowable range accurately.
Patent Document 1: H08-244952

### DISCLOSURE OF THE INVENTION

### PROBLEMS TO BE SOLVED BY THE INVENTION

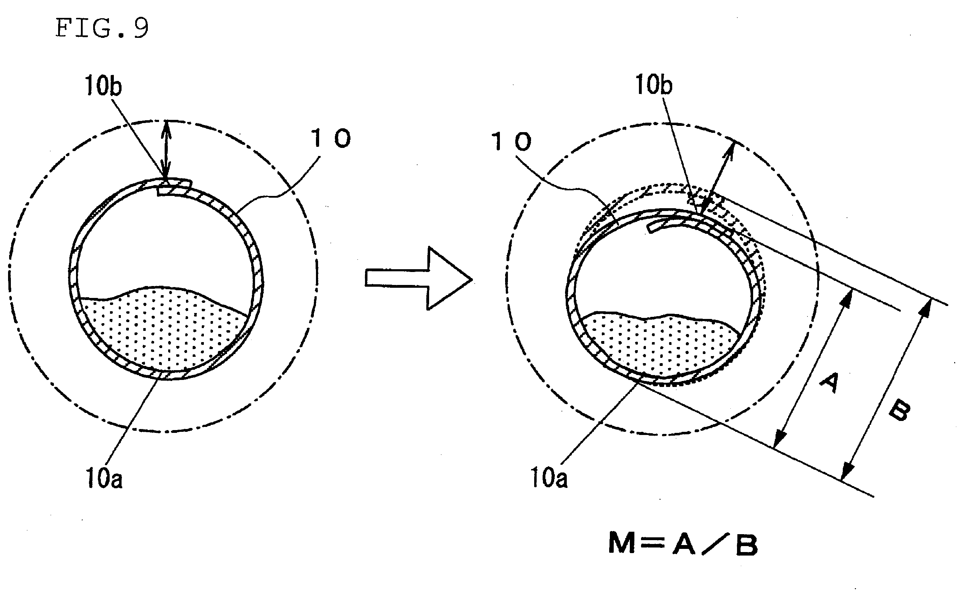

When an excessive depression occurs, as shown in Fig.9, a cross sectional retention M falls (as shown in Fig. 9, where a distance A is from a bottom of belt 10a to the overlap portion 10b while a distance B is from the bottom of the belt 10a to the overlap portion 10b in the case that the depression does not occur, the cross-sectional retention M = (A/B) × 100. When the excessive depression occurs, the delivery amount is reduced and the effect of the conveyor belt is not exhibited. Also, there is possibility that on a pulley portion the conveyor belt 10 does not expand and a braking phenomenon occurs. That may cause a closedown of the factory.
However, according to the method of detecting the position of the permanent magnet 51 by the loop coil 554 - 556 as Fig. 8, since the permanent magnet 51 is arranged only on the edge portion 10b, it is difficult to distinguish the twist from the depression. Also, since the distance from the permanent magnet 51 to the loop coil 554 - 556 enlarges in the case of that the depression is large enough to reduce the cross-sectional retention M, it is difficult to detect the overlap portion 10b accurately.
That may be almost the same as the method of detecting a detected zone 41 consisting of metal by a metal sensor 43. Further, the method has fault that twisted state can be detected only when the cross-sectional retention is 100%.

In the view of the above conventional problem, the present invention has prepared. It is the object of the present invention to provide an apparatus for detecting the deformation state of a pipe-conveyor belt which can detect the twisted state and depression degree of a rolled up portion readily and accurately.

### MEANS FOR SOLVING THE PROBLEM

According to a first aspect of the present invention, there is provided that a deformation state detecting apparatus for a pipe-conveyor belt which detects the deformation state such as a twist and depression of a pipe-conveyor into which an endless circulating belt is rolled up for conveying an object according to the appended claim 1.
In the pipe-conveyor, a portion where the conveyor belt is rolled up in the form of the pipe includes at least a conveyor portion carrying an object by wrapping it in its interior. A side on which the object is mounted is a front surface and a reverse surface to it is a rear surface.
According to a second aspect of the present invention, there is provided that a deformation state detecting apparatus for a pipe-conveyor belt according to claim 1, wherein an intermediate signal generator is arranged between the two signal generators.

According to a third aspect of the present invention, there is provided that a deformation state detecting apparatus for a pipe-conveyor belt according to claim 1 or claim 2, wherein the second signal generator is a bottom signal generator arranged on a center of the conveyor belt.
According to a fourth aspect of the present invention, there is provided that a deformation state detecting apparatus for a pipe-conveyor belt according to claim 3, wherein the overlap position signal generator comprises a first and second overlap position signal generators whose magnetization direction differs from each other.
According to a fifth aspect of the present invention, there is provided that a deformation state detecting apparatus for a pipe-conveyor belt according to any one of the claims 1 to 4, wherein the plurality of receivers are equally arranged at predetermined intervals.
According to a sixth aspect of the present invention, there is provided that a deformation state detecting apparatus for a pipe-conveyor belt according to any one of the claims 1 to 5, wherein each signal generator is a permanent magnet and each receiver is a magnetic sensor. According to a seventh aspect of the present invention, there is provided that a deformation state detecting apparatus for a pipe-conveyor belt according to claim 6, wherein the permanent magnet is a rubber magnet.

### EFFECT OF THE INVENTION

According to the present invention, two signal generators are arranged on the rear surface side of the pipe-conveyor belt in spaced each other and the plurality of receivers for receiving signals from the signal generating means are arranged on a position by which passes the conveyor belt and being surrounded from the outside of the conveyor belt. Therefore, the deformation state of the conveyor belt is detected in accordance with signal received by the receivers so that the twisted state and the depression degree at the rolled up portion of the pipe conveyor belt may be detected readily and accurately.
At this point, an intermediate signal generator is disposed between the two signal generators so that the twisted state and depression degree of the pipe-conveyor belt may be detected when the depression is such that the signal from the signal generator cannot be received. Also, the two signal generators are composed of an overlap portion signal generator arranged on a belt end portion that becomes an overlap portion when the conveyor belt is rolled up and a bottom signal generator arranged on the center of the conveyor belt so that the overlap portion may be detected accurately, even when the twist and the depression occur on the pipe-conveyor belt.

The overlap portion signal generator is composed of the first and second overlap portion signal generator whose magnetize directions are different from each other so that generation of reversed overlapping can be detected.
It is preferred to arrange a plurality of receivers at equal intervals. Thereby, twisting amount and depression amount can be discriminated readily.
As combination of each signal generator and each receiver, it is preferred to combine a permanent magnet that does not require an oscillator or a driving unit with a magnetic sensor for detecting magnetic field of the permanent magnet. Particularly, when a rubber magnet is used as the permanent magnet, not only it may be installed readily on the conveyor belt but also it is advantageous when the intermediate signal generator is used as a belt-formed member.

### BRIEF DESCRIPTION OF THE DRAWINGS

Fig. 1 is a diagram showing the structure of the deformation state detecting apparatus for the pipe-conveyor belt according to preferred embodiment of the present invention. Fig. 2 is a flowchart showing the method of detecting the deformation state of the pipe-conveyor belt according to preferred embodiment of the present invention.
Fig. 3 is a diagram showing the twisted state of the pipe-conveyor belt and the method of detecting it.
Fig. 4 is a diagram showing the depression state of the pipe-conveyor belt and the method of detecting it.
Fig.5 is a diagram showing other structure of the deformation state detecting apparatus for the pipe-conveyor belt according to the present invention.
Fig.6 is a diagram showing other structure of the deformation state detecting apparatus for the pipe-conveyor belt according to the present invention.
Fig. 7 is a diagram showing an example of a conventional method of detecting twisting of a pipe-conveyor belt.
Fig.8 is a diagram showing an other example of a conventional method of detecting twist of a pipe-conveyor belt.
Fig.9 is a diagram showing the depression state of the pipe-conveyor belt.

### REFERENCE NUMERALS

The numeral reference 1 denotes the deformation state of the pipe-conveyor belt detecting apparatus, 2 denotes the overlap portion signal generator, 3 denotes the bottom signal generator, 4A - 4D denote the intermediate signal generator, 510 - 521 denote the receiver, 6 denotes the belt deformation state judging unit, 7 denotes the belt deformation amount calculating unit, 8 denotes memory, 8M denotes the map, 10 denotes the conveyor belt (the pipe-conveyor belt), 20 denotes the corrective unit and 30 denotes the controller for the belt conveyor.

### BEST MODE FOR CARRYING OUT THE INVENTION

Preferred embodiment of the present invention is described hereinbelow with reference to accompanying drawings.

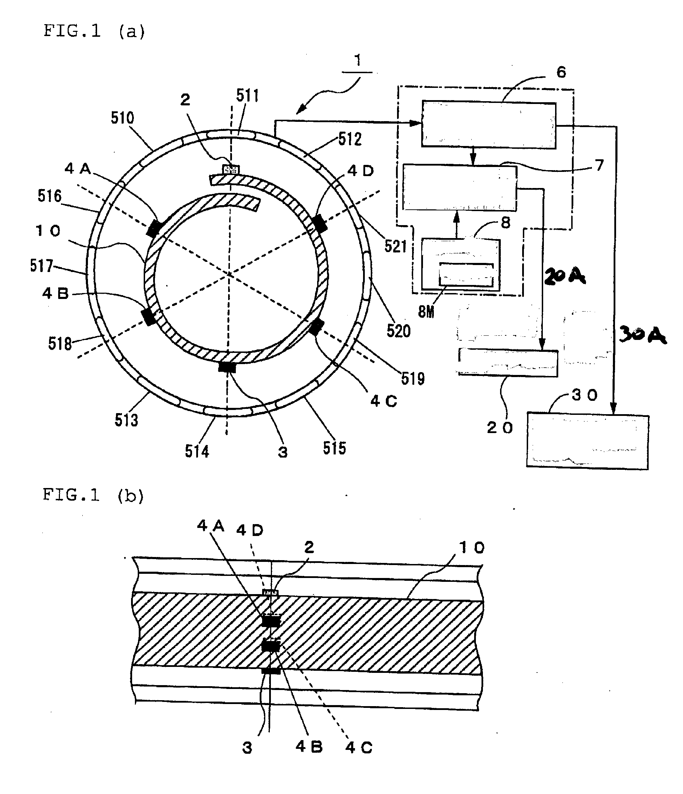

Fig.1 (a) and (b) are diagrams showing the structure of the deformation state of the pipe-conveyor belt detecting apparatus according 1 to preferred embodiment of the present invention. In Fig. 1 (a) and (b), the numeral 2 denotes the overlap portion signal generator installed to one end portion of the conveyor belt 10. The one end portion is the overlap portion (a position where both end of the belt is overlapped), when the conveyor belt 2 (pipe-conveyor belt) is rolled up. The numeral 3 denotes the bottom signal generator installed to the center of the conveyor belt 10. The center of the conveyor belt is the bottom when the conveyor belt is rolled up. The numerals 4A ~ 4D denote the intermediate signal generator arranged between the overlap portion signal generator 2 and the bottom signal generator 3. Those signal generators 2, 3 and 4A -4D are installed to the rear surface side of the conveyor belt 10.
The numerals 510 ~ 512, 513 ~ 515 and 516 ~ 521 denote receivers arranged on the position by which the conveyor belt 10 rolled up in the form of the pipe passes and surrounding the outside of the conveyor belt 10. The receivers detect signals (in embodiment, magnetic force changes) generated by each signal generator 2, 3, and 4A ~ 4D.
The numeral 6 denotes the belt deformation state judging unit processing output signal from the receivers 510 ~ 521 comprising the loop coils, detecting each peak value and judging the twisted state and the depression state of the conveyor belt 10 rolled up into the pipe-formed by detected peak value. The numeral 7 denotes the belt deformation amount calculator. When belt deformation amount can be calculated in the conveyor belt 10, the deformation amount calculator calculates twisting amount and depression degree of the conveyor belt 10 in accordance with each peak value and the map 8M stored in the memory 8 and indicating relation between angle difference and depression degree (the cross-sectional retention) of the overlap portion and the bottom position.
In this embodiment, the overlap portion signal generator 2, bottom signal generator 3 and the intermediate signal generator 4A - 4D are composed of a sheeted rubber magnet magnetized in a thickness direction.
The receivers 510 - 521 are composed of the loop coil. The receiver 511 is arranged on a position opposed to the overlap portion signal generator 2 and the receivers 510 and 512 are arranged on a left side and a right side of the receiver 511. The receiver 514 is arranged on a position opposed to the bottom signal generator 3 and the receivers 513 and 515 are arranged on a left side and right side of the receiver 514. The receivers 516 - 521 are arranged on a position opposed to the intermediate signal generator respectively. At this point, it is preferred that the magnetize directions of the intermediate signal generator 4A - 4D differ from that of the overlap poriton signal generator 2 and the bottom signal generator 3. Thereby, it is possible to clearly discriminate which signal generator sends signal.

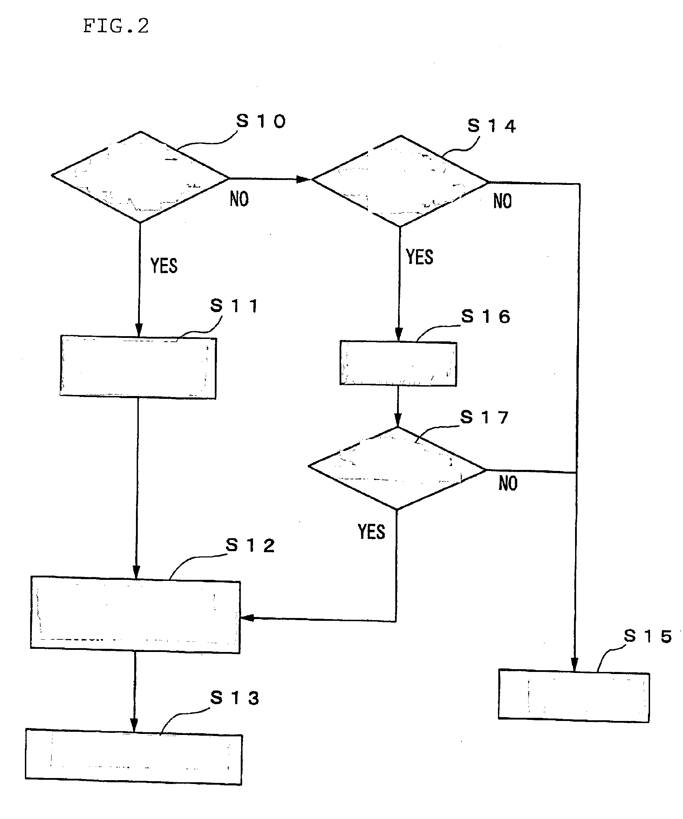

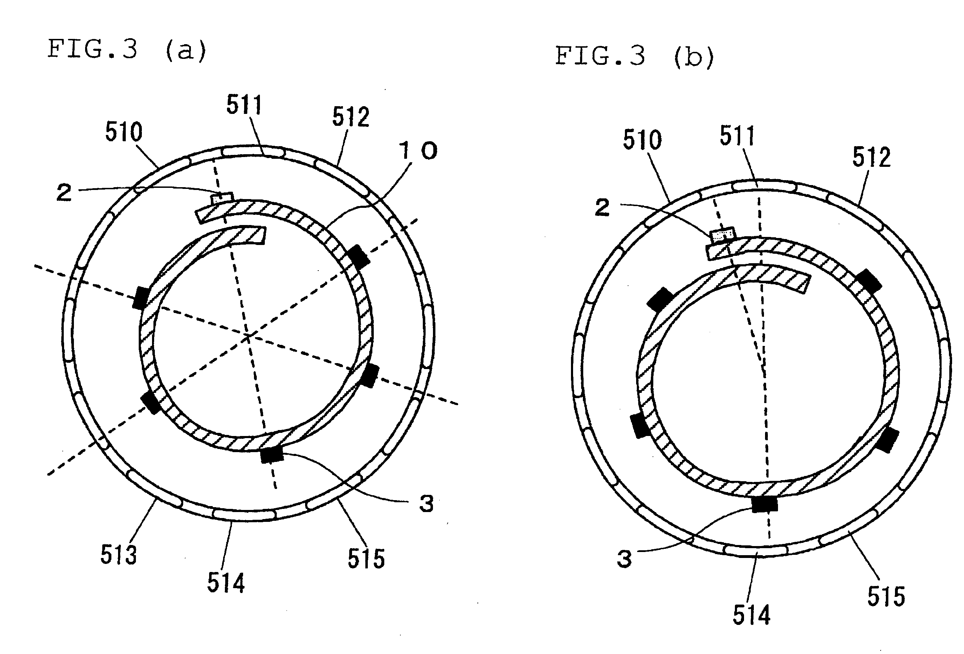

Next, a method of detecting the deformation state of the conveyor belt 10 rolled up in the form of the pipe will be described hereinbelow with making reference to the flowchart in Fig.2.
Firstly, in accordance with output from receivers 510 ~ 512, it is judged whether the overlap portion of the conveyor belt 10 rolled up in the form of the pipe can be detected (step S10). When the overlap position may be detected, the bottom portion can be detected. After the overlap portion and the bottom position can be detected (step S11), twisting angle and the cross-sectional retention of the conveyor belt 10 are calculated (step S12) and this data is transmitted to the corrective unit 20 (step S13).
For example, as shown in Fig. 3 (a), in the case of that only twist occurs and its twist angle is about 15° , the receivers 510 and 511 are proximate to the overlap portion signal generator 2 and the receivers 514 and 515 are proximate to the bottom signal generator 3. Thereby, since the overlap portion exists at a position that is turned at 180° from the bottom position, it can be understood that the depression does not occur. Also, as shown in Fig. 3(b), even when slight depression occurs (the cross-sectional retention is 90% or more), the receivers 510 and 511 are proximate to the overlap portion signal generator 2 while the receiver 514 is proximate to the bottom signal generator 3. Therefore, in the case, since the overlap portion exists at a position turning at about 170° from the bottom position, it can be understood that only depression occurs and its cross-sectional retention is about 90%. On the other hand, when there is not the bottom signal generator, output from the receiver 510 and 511 fall. Therefore, occurring of depression can be detected while the cross-sectional retention cannot be calculated.

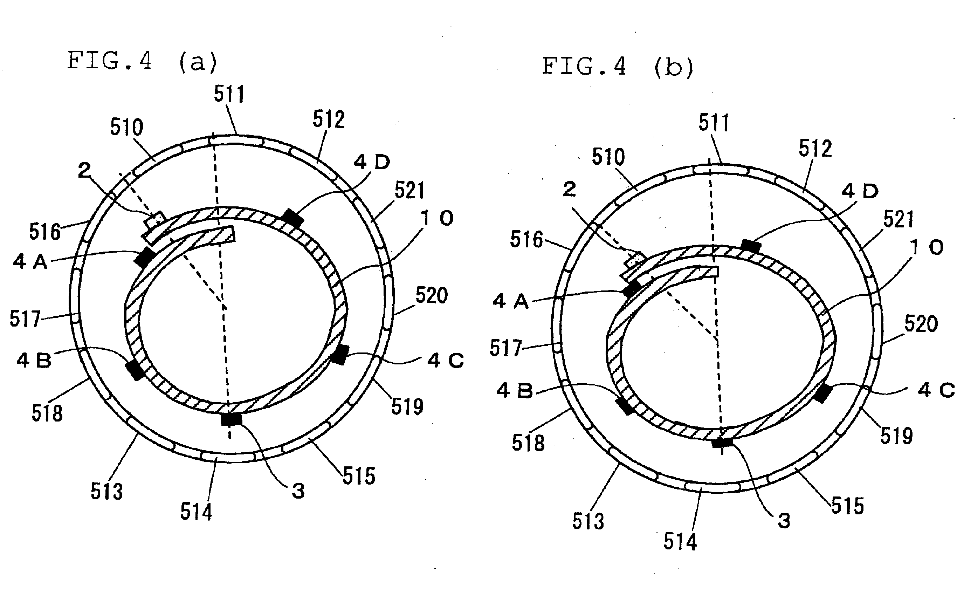

In the step S10, when the overlap portion cannot be detected, it is judged that large depression as the cross-sectional retention falls below 90% occurs and then, in the step S14, in accordance with output from the receivers 513 ~ 515, it is judged whether the bottom position of the conveyor belt 10 can be detected. When both of the overlap portion and the bottom position cannot be detected, it is highly possible that detection error occurs or the signal generator brakes down. In such a case, as shown in Fig. 1, the belt deformation state judging unit 6 transmits stop signal to the controller for the belt conveyor 30 to stop the conveyor belt 10 (step S15). When the bottom position can be detected, in the step S16, change of magnetic field from the intermediate signal generator 4A ~ 4D is detected by the receivers 510 ~ 521. Then, in the step S17, it is examined how many changes of magnetic field from the intermediate signal generator 4A ~ 4D can be detected. When the detected number exceeds 3, proceeding to the step S12, twisting angle and the cross-sectional retention are calculated. In the step S12, as shown in Fig. 4(a), when the detected number is 4, that is, when all of the changes of magnetic field from the intermediate signal generator 4A ~ 4D can be detected, it is judged that the cross-sectional retention is about 80% and the overlap portion exists on a position that is turned at 150° from the bottom position. Also, as shown in Fig. 4(a), when the detected number is 3, that is, when the conveyor belt 10 crushes and change of magnetic field of the intermediate signal generator 4D being distant from the receivers 510 - 512 cannot be detected, it is judged that the cross-sectional retention is about 60% and the overlap portion exists on a position where is turned at 120° from the bottom position.
When the detected number is less than 2, it is judged that large twist whose cross-sectional retention is less than 60% occurs to stop the conveyor belt 10 in the step 15.
Needless to say, if there is not the bottom signal generator 3, it is judged that large twist occurs once the overlap portion cannot be detected.

As above, according to preferred embodiment, the deformation state detecting apparatus according to the present invention comprises the overlap portion signal generator 2 and the bottom signal generator 3, which are composed of the rubber, are arranged on the one end of the rear side of the pipe-conveyor belt 10 and the center in the tire width direction, the intermediate signal generators 4A - 4D composed of the rubber are arranged between the overlap portion signal generator 2 and the bottom signal generator 3, the plurality of receivers 510 - 521, which are used for receiving signals from the above signal generators 2, 3 and 4A - 4D, are arranged on the outer circumference of the conveyor belt 10 rolled up in the form of the pipe so that the deformation state of the pipe-conveyor belt 10 is detected in accordance with signal from the signal generators. Thereby, the twist and depression can be clearly distinguished and the twisted state and depression degree of the rolled part of the pipe-conveyor 10 can be detected readily and accurately even when the depression is large.

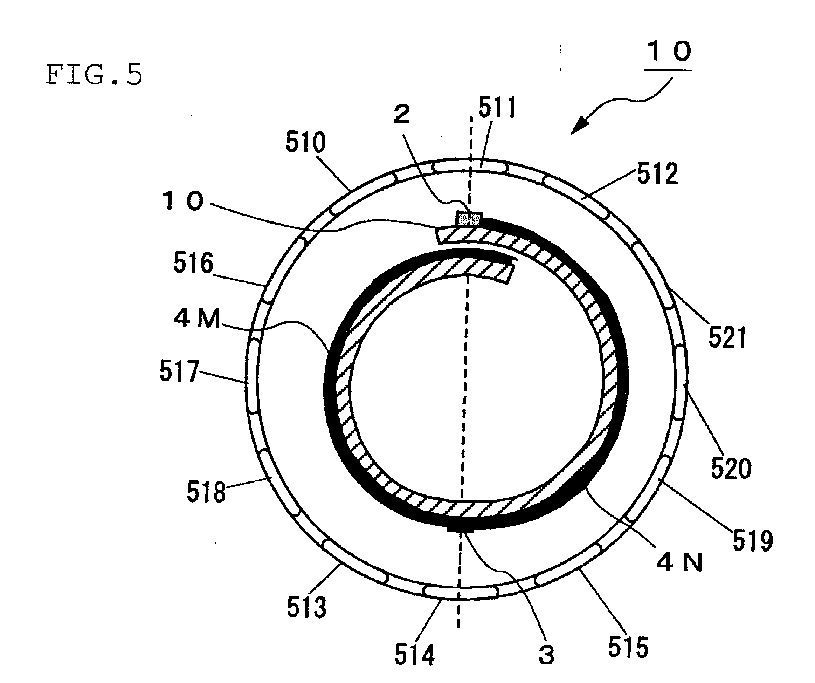

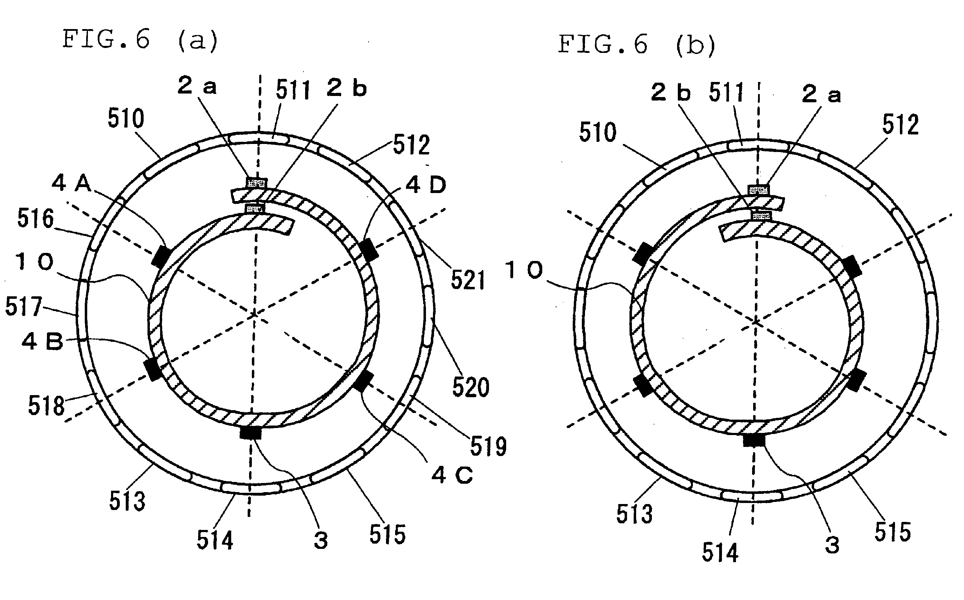

In above preferred embodiment, the intermediate signal generators 4A ~ 4D are composed of four rubber magnets. However, three or four intermediate signal generators may be arranged between the overlap portion signal generator 2 and the bottom signal generator 3 at constant intervals. Also, as shown in Fig. 5, a belt-formed rubber magnets 4M and 4N may be arranged between the overlap portion signal generator 2 and the bottom signal generator 3 as the intermediate signal generator.
The number and arrangement of the receivers 510 - 521 should not be limited to embodiment. They may properly be determined in accordance with the number and arrangement of the signal generators 2, 3 and 4A ~ 4D.
In above embodiment, the rubber magnet is used as the signal generator and the loop coil is used as the receiver. However, a microwave generator composed of a piezoelectric element may be used as the signal generator and a microwave sensor may be used as the receiver. When the microwave generator is used, frequency of the intermediate signal generator may be set to be different frequency from the overlap portion signal generator and the bottom signal generator so that signal received by the receiver can be extinguished.
Also, in above embodiment, though the overlap portion signal generator 2 is arranged on only one end portion of the conveyor belt 10, two overlap portion signal generator 2a and 2b may be arranged on both end of the conveyor belt 10. In such case, as shown in Fig. 6, N-pole of permanent magnet and S-pole are arranged to be opposed each other when the conveyor belt 10 is rolled up so that occurring of reverse-overlap on the overlap portion can be detected.

### INDUSTRIAL APPLICABILITY

As above, according to the present invention, since the deformation state of the pipe-conveyor can be detected readily and accurately, data on the deformation state is fed back to correct the deformation state of the conveyor belt rolled up so that the pipe-belt can be operated with stability and the object can be carried with certainly.
[Fig. 1 (a)]
   6: the belt deformation state judging unit
   7: the belt deformation amount calculating unit
   8: the memory
   8M: the map
   20A : deformation amount data
   30A : stop signal
   20: the corrective unit
   30: the controller for the belt conveyor
[Fig. 2]
   S10: whether the overlap position may be detected
   S11: detect peak of the overlap position and peak of the bottom position
   S12: calculate twist angle and cross-sectional retention of the overlap position
   S13: transmit data to the corrective unit
   S14: whether the bottom position may be detected
   S15: transmit stop signal
   S16: detect the intermediate portion
   S17 whether three or more may be detected
[Fig. 8]
   53: the judging unit
   53a: the twist judging unit
   53b: the depression judging unit

## Claims

1. A deformation state detecting apparatus (1) for a pipe-conveyor belt (10) which detects the deformation state such as a twist and depression of a pipe-conveyor into which an endless circulating belt is rolled up for conveying an object comprising:
two signal generators (2,3) a first signal generator (2) and a second signal generator (3) are arranged on a rear surface side of the conveyor belt (10) ;
a plurality of receivers (510 - 521) receiving signals from the two signal generators (2,3) and arranged in a position from which passes the conveyor belt (10) rolled up in the form of a pipe, surrounding an outside of the conveyor belt (10) and;
a detector (6, 7, 8) detecting the deformation state of the conveyor belt rolled up in the form of a pipe in accordance with the signals received by the receivers (510 - 521), **characterized in that** the first signal generator (2) is an overlap position signal generator arranged on a belt end portion that becomes an overlap portion when the conveyor belt (10) is rolled up and the second signal generator (3) is spaced apart from the first signal generator (2).

2. A deformation state detecting apparatus for a pipe-conveyor belt according to claim 1, wherein an intermediate signal generator (4A - 4D) is arranged between the two signal generators.

3. A deformation state detecting apparatus for a pipe-conveyor belt according to claim 1 or claim 2, wherein the second signal generator (3) is a bottom signal generator arranged on a center of the conveyor belt.

4. A deformation state detecting apparatus for a pipe-conveyor belt according to claim 3, wherein the overlap position signal generator comprises a first (2a) and second (2b) overlap position signal generators whose magnetization direction differs from each other.

5. A deformation state detecting apparatus for a pipe-conveyor belt according to any one of the claims 1 to 4, wherein the plurality of receivers (510 - 521) are equally arranged at predetermined intervals.

6. A deformation state detecting apparatus for a pipe-conveyor belt according to any one of the claims 1 to 5, wherein each signal generator (2, 2a, 2b, 3, 4A - 4D) is a permanent magnet and each receiver (510 - 521) is a magnetic sensor.

7. A deformation state detecting apparatus for a pipe-conveyor belt according to claim 6, wherein the permanent magnet is a rubber magnet.

## Patentansprüche

1. Verformungszustandserkennungsvorrichtung (1) für ein Schlauchförderband (10), die den Verformungszustand wie eine Verdrehung und eine Vertiefung eines Schlauchförderers erkennt, in den ein endloses umlaufendes Band zum Befördern eines Objekts aufgerollt wird, die Folgendes umfasst:
zwei Signalgeneratoren (2, 3), ein erster Signalgenerator (2) und ein zweiter Signalgenerator (3), die auf einer Rückflächenseite des Förderbands (10) angeordnet sind;
mehrere Empfänger (510 - 521) zum Empfangen von Signalen von den beiden Signalgeneratoren (2, 3), die in einer Position angeordnet sind, von der das schlauchförmig aufgerollte Förderband (10) abläuft und eine Außenseite des Förderbandes (10) umgibt, und
einen Detektor (6, 7, 8), der den Verformungszustand des schlauchförmig aufgerollten Förderbandes gemäß den von den Empfängern (510 - 521) empfangenen Signalen erkennt, **dadurch gekennzeichnet, dass** der erste Signalgenerator (2) ein Überlappungspositionssignalgenerator ist, der auf einem Bandendeabschnitt angeordnet ist, der zu einem Überlappungsabschnitt wird, wenn das Förderband (10) aufgerollt wird, und der zweite Signalgenerator (3) von dem ersten Signalgenerator (2) beabstandet ist.

2. Verformungszustandserkennungsvorrichtung für ein Schlauchförderband nach Anspruch 1, wobei ein Zwischensignalgenerator (4A - 4D) zwischen den beiden Signalgeneratoren angeordnet ist.

3. Verformungszustandserkennungsvorrichtung für ein Schlauchförderband nach Anspruch 1 oder Anspruch 2, wobei der zweite Signalgenerator (3) ein unterer Signalgenerator ist, der in einer Mitte des Förderbandes angeordnet ist.

4. Verformungszustandserkennungsvorrichtung für ein Schlauchförderband nach Anspruch 3, wobei der Überlappungspositionssignalgenerator einen ersten (2a) und einen zweiten (2b) Überlappungspositionssignalgenerator umfasst, deren Magnetisierungsrichtungen sich voneinander unterscheiden.

5. Verformungszustandserkennungsvorrichtung für ein Schlauchförderband nach einem der Ansprüche 1 bis 4, wobei die mehreren Empfänger (510 - 521) gleichmäßig in vorbestimmten Intervallen angeordnet sind.

6. Verformungszustandserkennungsvorrichtung für ein Schlauchförderband nach einem der Ansprüche 1 bis 5, wobei jeder Signalgenerator (2, 2a, 2b, 3, 4A - 4D) ein Dauermagnet ist und jeder Empfänger (510 - 521) ein Magnetsensor ist.

7. Verformungszustandserkennungsvorrichtung für ein Schlauchförderband nach Anspruch 6, wobei der Dauermagnet ein Gummimagnet ist.

## Revendications

1. Appareil de détection d'état de déformation (1) pour une courroie transporteuse tubulaire (10) qui détecte l'état de déformation tel qu'une torsion et une dépression d'un transporteur tubulaire dans lequel une courroie de circulation sans fin est enroulée pour transporter un objet, comprenant :
deux générateurs de signaux (2, 3), un premier générateur de signaux (2) et un second générateur de signaux (3) sont agencés sur un côté de surface arrière de la courroie transporteuse (10) ;
une pluralité de récepteurs (510 - 521) recevant des signaux des deux générateurs de signaux (2, 3) et agencés dans une position à partir de laquelle passe la courroie transporteuse (10) enroulée sous la forme d'un tuyau entourant un extérieur de la courroie transporteuse (10) ; et
un détecteur (6, 7, 8) détectant l'état de déformation de la courroie transporteuse enroulée sous la forme d'un tuyau selon les signaux reçus par les récepteurs (510 - 521), **caractérisé en ce que** le premier générateur de signaux (2) est un générateur de signaux de position de chevauchement agencé sur une partie d'extrémité de courroie qui devient une partie de chevauchement lorsque la courroie transporteuse (10) est enroulée et que le second générateur de signaux (3) est éloigné du premier générateur de signaux (2).

2. Appareil de détection d'état de déformation pour une courroie transporteuse tubulaire selon la revendication 1, dans lequel un générateur de signaux intermédiaire (4A - 4D) est agencé entre les deux générateurs de signaux.

3. Appareil de détection d'état de déformation pour une courroie transporteuse tubulaire selon la revendication 1 ou la revendication 2, dans lequel le second générateur de signaux (3) est un générateur de signaux inférieur agencé sur un centre de la courroie transporteuse.

4. Appareil de détection d'état de déformation pour une courroie transporteuse tubulaire selon la revendication 3, dans lequel le générateur de signaux de position de chevauchement comprend un premier (2a) et un second (2b) générateur de signaux de position de chevauchement dont les directions de magnétisation diffèrent l'une de l'autre.

5. Appareil de détection d'état de déformation pour une courroie transporteuse tubulaire selon l'une quelconque des revendications 1 à 4, dans lequel la pluralité de récepteurs (510 - 521) sont agencés à égale distance à intervalles prédéterminés.

6. Appareil de détection d'état de déformation pour une courroie transporteuse tubulaire selon l'une quelconque des revendications 1 à 5, dans lequel chaque générateur de signaux (2, 2a, 2b, 3, 4A - 4D) est un aimant permanent et chaque récepteur (510-521) est un capteur magnétique.

7. Appareil de détection d'état de déformation pour une courroie transporteuse tubulaire selon la revendication 6, dans lequel l'aimant permanent est un aimant caoutchouc.
